# EUROPEAN PATENT APPLICATION

(11) **EP 1 502 781 A2**
(43) Date of publication of application: **02.02.2005**
(21) Application number: 04015883.4
(22) Date of filing: 06.07.2004
(51) Int. Cl.: B60H 1/00

(54) **Vehicle having an air conditioning unit and use of an air conditioning unit thereof**

(30) Priority: 07.07.2003 JP 2003192915; 08.07.2003 JP 2003271902; 17.07.2003 JP 2003275783; 24.07.2003 JP 2003279079; 24.07.2003 JP 2003279078
(71) Applicant: Mazda Motor Corporation, Aki-gun, Hiroshima 730-8670 (JP)
(72) Inventor: Toda, Isao, Aki-gun, Hiroshima 730 8670 (JP); Iwasaka, Kouji, Aki-gun, Hiroshima 730 8670 (JP); Nakamura, Yukio, Aki-gun, Hiroshima 730 8670 (JP)
(74) Representative: Müller-Boré & Partner Patentanwälte

(57) **Abstract**

A rear air conditioning unit (**12**) is disposed behind a rear bulkhead (**9**) separating a rear portion of a passenger compartment (**2**). The rear air conditioning unit (**12**) takes in inside-and-outside air for air conditioning via a rear cowl portion (**10**) disposed above the rear bulkhead head (**9**) and blows off conditioned air into the passenger compartment (**2**).

Accordingly, since a layout of an air conditioning unit disposed at the front side of the vehicle is omitted, an engine (**5**) as a heavy article can be located at the center side of the vehicle and a yaw inertia moment of the vehicle can be reduced, thereby improving maneuverability and stability of the vehicle and dynamic performance of the vehicle. Further, a layout of the rear air conditioning unit (**12**) and induction of the inside-and-outside air can be made compatible.

## Description

The present invention relates to a vehicle comprising an air conditioning unit to control air conditioning of an inside of a passenger compartment of the vehicle and use of an air conditioning unit therefor.

Conventionally, the following structure is known as the above-mentioned air conditioner for a vehicle. Namely, it is a so-called twin air-conditioning type of air conditioner for a vehicle in which there is provided at a front side of the vehicle an air conditioning unit including a blower, an evaporator, and a heater core, while there is provided at a rear side of the vehicle a rear cooler unit including a blower and an evaporator (see Japanese Laid-Open Patent Publication No. 5-193337).

In this air conditioner for a vehicle, since the air conditioning unit is disposed at the front side of the vehicle, there are problems that a moved-back layout of a vehicle engine would be prevented and a yaw inertia moment would become large, thereby deteriorating maneuverability and stability of the vehicle and dynamic performance of the vehicle.

Meanwhile, the following structure is known as an air conditioner for a so-called open car. Namely, an air conditioning unit for the open car is placed at a front portion of a vehicle body between a dash lower panel and an instrument panel (see Japanese Laid-Open Patent Publication No. 7-266841).

In this air conditioner of the open car, there are the same problems that a moved-back layout of a vehicle engine is difficult due to the arrangement of the air conditioner and a yaw inertia moment would become large, thereby deteriorating maneuverability and stability of the vehicle and dynamic performance of the vehicle.

Accordingly, an object of the present invention is to provide a vehicle comprising an air conditioner having an improved maneuverability and stability of the vehicle and dynamic performance of the vehicle by reducing a yaw inertia moment.

The object is solved by a vehicle according to the present invention of Claim 1 and by a use of an air conditioning unit according to claim 19. Preferred embodiments are subject of the dependent claims.

Accordingly, there is provided a vehicle having an improved maneuverability and stability of the vehicle and dynamic performance of the vehicle by reducing a yaw inertia moment and providing compatibleness of a layout of a rear air conditioning unit and an induction of inside-and-outside air

According to the present invention, there is provided a vehicle, particularly an air conditioner for a vehicle, comprising a passenger compartment of the vehicle, a rear bulkhead at least partly separating a rear portion of the passenger compartment, a rear cowl portion disposed at least partly above the rear bulkhead, and a rear air conditioning unit disposed behind the rear bulkhead, the rear air conditioning unit taking in inside-and-outside air for air conditioning via the rear cowl portion and blowing off conditioned air into the passenger compartment of the vehicle.

Accordingly, since a layout of an air conditioning unit disposed at the front side of the vehicle is omitted, a vehicle engine as a heavy article can be located at the center side of the vehicle and a yaw inertia moment of the vehicle can be reduced, thereby improving the maneuverability and stability of the vehicle and the dynamic performance of the vehicle. Namely, compatibleness of a center layout of the engine and a layout of the air conditioning unit can be provided.

Further, since the rear air conditioning unit takes in the inside-and-outside air for air conditioning via the rear cowl portion and blows off the conditioned air into the passenger compartment of the vehicle, compatibleness of the layout of the rear air conditioning unit and the induction of the inside-and-outside air can be provided.

According to a preferred embodiment of the present invention, an engine room in which an engine of the vehicle is disposed is formed before the passenger compartment of the vehicle. Accordingly, a compact vehicle with a front engine can be provided.

According to another preferred embodiment of the present invention, an upper part of the passenger compartment is covered by a roof capable of opening. Accordingly, a simple structure of the air conditioner for a so-called open or convertible car can be provided.

According to another preferred embodiment of the present invention, there are provided an inside-and-outside air induction port formed on an upper side of the rear cowl portion and an aero-board attached near the inside-and-outside air induction port, wherein the aero-board is attached so as to change its position and a positional change of said aero-board provides an induction switching of the inside-and-outside air for air conditioning. Accordingly, a proper switching between an inside-air induction and an outside-air induction can be attained by changing the position of the aero-board.

According to another preferred embodiment of the present invention, there is provided an outside-air induction passage which leads to the rear cowl portion and opens to an outside of the vehicle through a vehicle outside wall. Accordingly, the induction of the outside air through the vehicle outside wall can be ensured.

According to another preferred embodiment of the present invention, there is provided at least one blowoff or discharge port for blowing off or discharging the conditioned air from the rear air conditioning unit, which is formed on a side of the rear bulkhead which is located toward an inside of the passenger compartment of the vehicle. This blowoff port may be provided for a neck portion of the passenger sitting on the seat. Accordingly, the distance between the rear air conditioning unit and the blowoff port can be made short, thereby reducing a passage length between them.

According to another preferred embodiment of the present invention, a seat of the vehicle is disposed before and close to the rear bulkhead in the passenger compartment of the vehicle, and the seat has at least one blowoff or discharge port formed thereon or therein for blowing off or discharging the conditioned air from the rear air conditioning unit. Accordingly, comfortable air conditioning can be attained by the conditioned air from the blowoff port formed on or in the seat.

According to another preferred embodiment of the present invention, the blowoff port on the seat is located so as to blow off the conditioned air toward a back portion of a passenger sitting on the seat. Accordingly, since a proper control of air conditioning at the back portion of the passenger is provided, comfortable air conditioning can be attained.

According to another preferred embodiment of the present invention, the blowoff port on the seat is located so as to blow off the conditioned air toward a lumbar portion of a passenger sitting on the seat. Accordingly, since a proper control of air conditioning at the lumber portion of the passenger is provided, comfortable air conditioning can be attained.

According to another preferred embodiment of the present invention, there is provided a tunnel portion extending forward of the vehicle from a lower portion of the rear bulkhead, and the tunnel portion has a blowoff port formed thereon for blowing off the conditioned air from the rear air conditioning unit toward a thigh portion of a passenger. Accordingly, since a proper control of air conditioning at the thigh portion of the passenger is provided with utilizing the tunnel portion, comfortable air conditioning can be attained.

According to another preferred embodiment of the present invention, there is provided a tunnel portion extending forward of the vehicle from a lower portion of the rear bulkhead, and the tunnel portion has a blowoff port formed thereon for blowing off the conditioned air from the rear air conditioning unit toward a foot portion of a passenger. Accordingly, since a proper control of air conditioning at the foot portion of the passenger is provided with utilizing the tunnel portion, comfortable air conditioning can be attained.

According to another preferred embodiment of the present invention, there is provided a tunnel member above the tunnel portion which forms a passage having a closed cross section with the tunnel portion, and an air conditioning duct for the conditioned air from the rear air conditioning unit is formed in the passage having the closed cross section. Accordingly, the air conditioning duct can be provided properly by utilizing the closed cross section between the tunnel portion and the tunnel member formed to increase rigidity of a vehicle floor and a vehicle body.

According to another preferred embodiment of the present invention, the rear air conditioning unit takes in at least inside air of the passenger compartment, conditions the took-in air, and blows off or discharges the conditioned air into the passenger compartment, and there is further provided a front natural ventilation unit which is disposed before the passenger compartment, takes in outside air of the vehicle, and blows off the took-in air into the passenger compartment. The front natural ventilation unit is a unit which has no function of temperature controlling and takes in the outside air of the vehicle into the passenger compartment of the vehicle. Accordingly, the rear air conditioning and the natural ventilation can made compatible.

According to another preferred embodiment of the present invention, there is provided air conditioning control means for cooperatively controlling the rear air conditioning unit and the front natural ventilation unit. Accordingly, since the rear air conditioning unit and the front natural ventilation unit are controlled cooperatively by the air conditioning control means, utility of controlling can be improved without controlling them separately.

According to another preferred embodiment of the present invention, there is provided a tunnel portion extending forward of the vehicle from a lower portion of the rear bulkhead, and the tunnel portion has a blowoff port formed thereon for blowing off the outside air of the vehicle from the front natural ventilation unit. Accordingly, a comfortable feeling by the outside air during a vehicle running can be provided to the passenger by utilizing the tunnel portion. Especially, the ventilation by this outside air (natural wind) can be enhanced for the passenger of the open car.

According to another preferred embodiment of the present invention, the rear air conditioning unit is disposed between the rear bulkhead and a trunk room which is disposed behind the rear bulkhead, and there is further provided a trunk-room cooling-air passage for taking in cooling air from the rear air conditioning unit and providing the cooling air into the trunk room to cool an inside of the trunk room. Accordingly, since the rear air conditioning unit is disposed between the rear bulkhead and the trunk room behind the rear bulkhead and the trunk room is cooled by the cooling air from the rear air conditioning unit, forming the trunk room and providing the rear air conditioning unit can be made compatible, and also the trunk room can be cooled by the rear air conditioning unit of the air conditioner for the vehicle, without providing any additional cooling devices for the trunk room. Further, a cooling passage between the rear air conditioning unit and the trunk room can be made short.

According to another preferred embodiment of the present invention, the trunk room is divided into plural load compartments, and the cooling air is introduced into at least one of the load compartments to constitute it as a cooler box. Accordingly, the cooler box can be cooled certainly and efficiently.

According to another preferred embodiment of the present invention, there is provided a suspension damper for suspending a rear wheel of the vehicle close to the trunk room, and the suspension damper is cooled by the cooling air from the rear air conditioning unit. Accordingly, since the cooling air of the rear air conditioning unit cools the suspension damper, durability of the suspension damper can be prevented from deteriorating and the function of the damper can be also prevented from changing due to a heat. Particularly, heat deterioration of oil, a packing, and a rubber in the damper can be prevented.

According to another preferred embodiment of the present invention, there is provided a damper cooling-air passage for taking in the cooling air from the rear air conditioning unit and providing the cooling air to the suspension damper. Accordingly, the damper can be cooled more certainly by the cooling air from the damper cooling-air passage.

According to another preferred embodiment of the present invention, there is provided a suspension damper for suspending a rear wheel of the vehicle behind the rear air conditioning unit, and the suspension damper is cooled via a damper cooling-air passage which is formed for taking in cooling air from the rear air conditioning unit and providing the cooling air to the suspension damper. Accordingly, since the cooling air from the rear air conditioning unit is led to the suspension damper via the damper cooling-air passage and cools the damper (particularly, oil, packing, and rubber in the damper), durability of the suspension damper can be prevented from deteriorating and the function of the damper can be also prevented from changing due to the heat.

Generally, while the vehicle remains parked outside in the daytime, the temperature of an atmosphere around the suspension damper increases to a high one at which the durability of the suspension damper will deteriorate or the damper function will change due to the heat. According to the above-mentioned structure, however, these problems can be solved. Particularly, this should be effective in summer having a high temperature outside.

According to the invention there is further provided a use of an air conditioner as a rear air conditioning unit for a vehicle according to the invention or a preferred embodiment thereof.

Other features, aspects, and advantages of the present invention will become apparent from the following description of the invention which refers to the accompanying drawings. It should be understood that even though embodiments are separately described, single features thereof may be combined to additional embodiments.
FIG. **1** is a schematic side view of a vehicle equipped with an air conditioner according to the present invention.
FIG. **2** is a plan view of FIG. **1**.
FIG. **3** is a sectional view of a major part.
FIG. **4** is an enlarged side view of a major part of FIG. **1**.
FIG. **5** is a side view showing an inside-air induction state by a positional change of an aero-board.
FIG. **6** is a side view showing an outside-air induction state by the positional change of the aero-board.
FIG. **7** is a perspective view of a major part of FIG. **4.**
FIG. **8** is a side view showing another embodiment of an air conditioner for a vehicle.
FIG. **9** is an enlarged sectional view of a major part taken on line A-A of FIG. 7.
FIG. **10** is a perspective view showing a layout of ducts.
FIG. **11** is a side view of a major part of FIG. **10.**
FIG. **12** is a sectional view showing a relationship between a seat back and a duct.
FIG. **13** is a side view showing another embodiment of a layout of ducts.
FIG. **14** is a sectional view showing another embodiment of a structure of a duct layout for the seat back.
FIG. **15** is a plan view of a trunk room in which plural load compartments are partitioned.
FIG. **16** is a plan view of another embodiment of load compartment partition.
FIG. **17** is a sectional view showing a relationship between a suspension damper and a duct.
FIG. **18** is a side view showing a front natural ventilation unit.
FIG. **19** is a perspective view showing the front natural ventilation unit.
FIG. **20** is a perspective view showing another embodiment of the front natural ventilation unit.
FIG. **21** is a perspective view showing another embodiment of a layout of an air conditioning control portion.

Hereinafter, preferred embodiments of the present invention will be described with reference to the accompanying drawings.

An exemplary embodiment will be described in detail referring to the drawings.

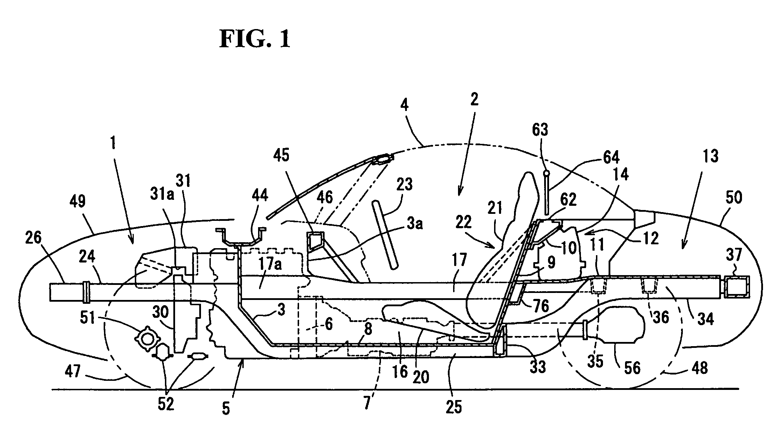

The drawings illustrate an air conditioner for a vehicle. Firstly, a structure of a vehicle body will be described referring to FIGS. **1** through **3.** Herein, arrows **F, R, IN**, and OUT denote respectively a forward direction, a backward direction, an inside direction, and an outside direction of the vehicle in the drawings.

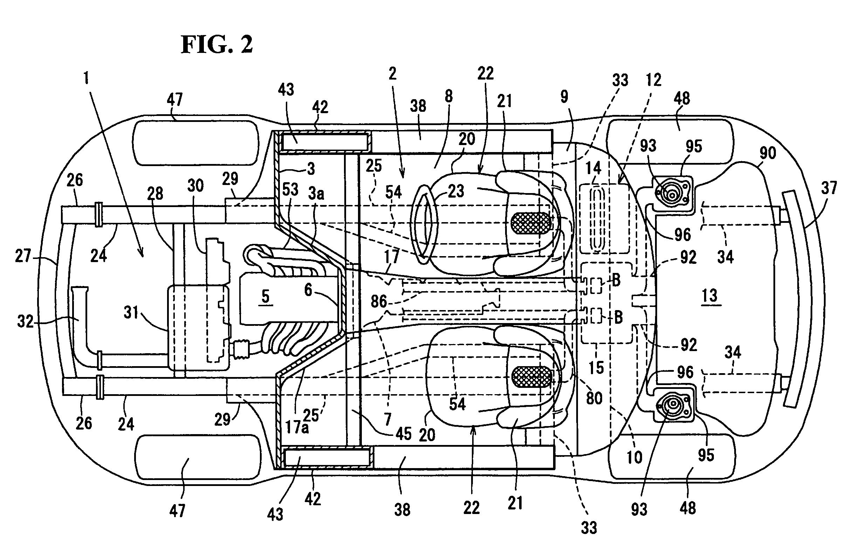

In a side view of FIG. **1** and a plan view of FIG. **2,** a dash lower panel **3** (a dash panel) separates a passenger compartment **2** from an engine room or compartment **1** in a longitudinal direction of the vehicle. An upper part of the passenger compartment **2** is covered by a roof **4** (a movable or convertible roof) which is capable of opening. An intermediate part, preferably a central part of the dash lower panel **3** in a width direction of the vehicle is recessed backward to form a recess portion **3a**, and an engine **5** is at least partly disposed in the recess portion **3a**.

The engine **5** is disposed substantially in the longitudinal direction of the vehicle and comprises an ISG unit **6** (Integrated Starter Generator Unit, functioning as both a starter and a generator, which includes a stator and a rotor in a case, in which the rotor is rotated by a drive shaft such as a propeller shaft to produce electric power). Further, a transmission **7** is disposed behind the ISG unit **6** so as to be connected continuously to the ISG unit **6** in a tunnel portion **16** of a floor panel **8.**

Further, the floor panel **8** is continuously connected to a lower end portion of the dash lower panel **3** to extend backward in a substantially horizontal direction. A rear bulkhead **9** is provided so as to rise up slantingly from a rear portion of the floor panel **8**, at a back face of an upper end portion of which there is provided a rear cowl portion **10** extending substantially in a width direction of the vehicle. Herein, the rear bulkhead **9** is a panel member which at least partly separates the passenger compartment **2** from a rear part compartment.

Further, a rear floor **11** is provided so as to extend backward from an intermediate portion, preferably substantially a middle portion of the rear bulkhead **9** in a vertical direction of the vehicle. A rear air conditioning unit **12** for air-conditioning the passenger compartment **2** is provided near the rear cowl portion **10** on the rear floor **11**, and a so-called trunk room **13** (a load compartment) is formed behind the rear air conditioning unit **12.** As apparent from FIG. **1,** the rear air conditioning unit **12** is disposed within a wheel base of the vehicle.

The rear air conditioning unit **12,** as illustrated in FIG. **2,** comprises a blower and cooling unit **14**, and a heater unit **15**. The heater unit **15** is disposed at a substantially central portion in the vehicle width direction, and the blower and cooling unit **14** is disposed at one side of the vehicle or laterally of the heater unit **15** in the vehicle width direction.

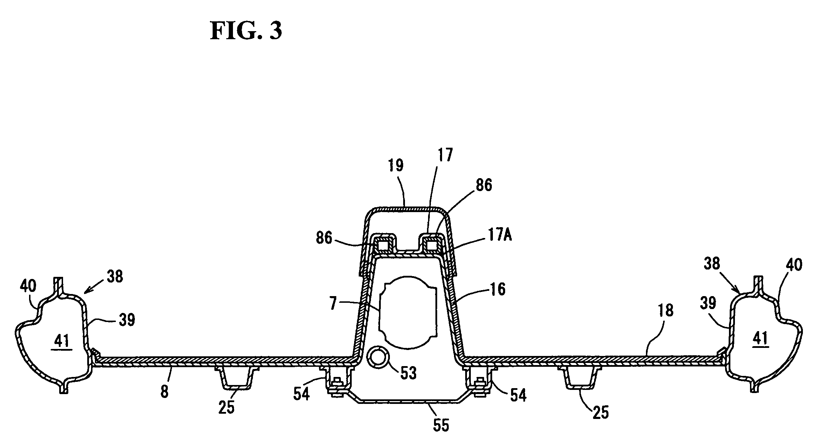

At a central portion of the floor panel **8** constituting a vehicle floor substantially continuously connected to the dash lower panel **3**, as shown in FIGS. **1** and **3**, there is provided the tunnel portion **16** which at least partly protrudes in the passenger compartment **2** and extends substantially in the longitudinal direction of the vehicle. A upper tunnel member **17** (a so-called high-mount-backbone frame) is fixed on an upper portion of the tunnel portion **16** along the tunnel portion **16**. The upper tunnel member **17** is connected to the dash lower panel **3** at its front end and to the rear bulkhead **9** at its rear end. Substantially closed cross sections **17A**, **17A** extending substantially in the longitudinal direction are formed with or on the upper tunnel member **17** and the tunnel portion **16** as shown in FIG. **3.** Thus, the upper tunnel member 17 provides a structure which can improve rigidity of vehicle floor and body.

Herein, as illustrated in FIG. **3,** a floor mat **18** is put on the floor panel **8** and the tunnel portion **16**, and there is provided a console **19** to substantially cover the upper tunnel member **17** and the tunnel portion **16**.

There are provided a pair of left and right seats **22**, **22** on the floor panel **8** with the above-mentioned tunnel portion **16** and upper tunnel member **17** between them, which include seat cushions **20, 20** and seat backs **21, 21** respectively. In this - embodiment, the right seat **22** corresponding to a steering wheel **23** constitutes a driver's seat, and the left seat **22** constitutes a passenger's seat.

Herein, in the above-mentioned engine room **1**, there are provided a pair of left and right front side frames **24**, **24**, rear ends of which are connected with the dash lower panel **3** and which extend forward in the longitudinal direction from the dash lower panel **3**. A kick-up portion of each rear portion of the front side frames **24**, **24** is provided along the dash lower panel **3,** and there are provided a pair of left and right floor frames **25**, **25** which are coupled to respective lower ends of the kick-up portions and extend backward along the floor panel **8**.

Connecting members **26**, **26** are attached to front ends of the front side frames **24**, **24**, and a bumper reinforcement **27** is formed to connect the both connecting members **26**, **26** and extends in the vehicle width direction.

Further, there is provided a front cross member **28** interconnecting the front side frames **24**, **24** and extending substantially in the vehicle width direction. There are provided a pair of batteries **29**, **29** just before a normal cross section of the dash lower panel **3** beside the engine **5**, which are attached on the front side frames **24**, **24**.

The batteries **29**, **29** also function to charge an electric energy generated by the ISG unit **6** therein, which are placed on conjunction portions of the front side frames **24**, **24** with dash lower panel in the present embodiment. Herein, front ends of the batteries **29**, **29** are so located before the engine **5** as to receive a load caused by a head-on collision of the vehicle, thereby preventing or reducing the likeliness of the engine **5** from moving back.

Extensions **17a, 17a** of the upper tunnel member **17** are connected to battery-disposed portions of the dash lower panel **3** as shown in FIG. **2** so as to convey the collision load properly to the vehicle body.

Further, as shown in FIGS. **1** and **2,** a radiator **30** is disposed between the batteries **29**, **29** in the engine room **1** so as to at least partly overlap with the batteries **29, 29** in the longitudinal direction of the vehicle.

Further, heavy articles such as the driving device including the engine **5** and the ISG unit **6,** and auxiliary parts of the batteries **29, 29** and the radiator **30** are all disposed, as shown in FIGS. **1** and **2,** within the wheel base in order to reduce yaw inertia moments thereof.

Also, as shown in FIG. **1,** there is provided an air cleaner **31** including a recess portion **31a** at the bottom, and an upper tank of the radiator **30** is disposed so close to the recess portion **31a** that the air cleaner **31** at least partly overlaps with the radiator **30** in the vertical direction and/or the longitudinal direction of the vehicle. The air cleaner **31** is coupled to a bent, preferably substantially L-shaped intake pipe **32,** when viewed in a plan view, at its upstream end as shown in FIG. **2.**

Herein, as illustrated in FIGS. **1** and **2,** rear cross members **33, 33** extending substantially in the vehicle width direction are disposed at rear portions of the floor frames **25, 25** which are fixed to a lower face of the floor panel **8**.

A pair of left and right rear side frames **34, 34** are provided so as to extend at least partly under the rear floor **11** from back faces of the rear cross members **33**, **33**. Two rear cross members **35, 36** extending substantially in the vehicle width direction are provided so as to be interposed between the rear side frames **34, 34** and apart from each other in the longitudinal direction. Further, a rear bumper reinforcement **37** extending substantially in the width direction is provided at rear portions of the rear side frames **34**, **34**.

As shown in FIGS. **2** and **3,** there are provided a pair of side sills **38, 38** at both left-and-right ends of the floor panel **8,** which extend substantially in the longitudinal direction substantially in parallel to the floor frames **25, 25**. Each of the side sills **34, 34,** as shown in FIG. **3**, is comprised of a side sill inner **39** and a side sill outer **40** to form a vehicle-body rigidity member with a side sill closed cross section **41** extending substantially in the longitudinal direction of the vehicle. Herein, a side sill reinforcement may be provided in the side sill closed section **41** at need.

The side sills **38**, **38** are connected to lower ends of hinge pillars **42**, **42** extending vertically at their front ends respectively as shown in FIG. **2**.. Each of the hinge pillars **42**, **42** is comprised of a hinge pillar inner and a hinge pillar outer to form a vehicle-body rigidity member with a closed cross section **43** extending substantially in the vertical direction.

There is provided a cowl upper panel **44** that is disposed above or near the dash lower panel **3** so as to extend substantially in the vehicle width direction. There is also provided an instrument panel member **45** preferably with a substantially closed cross section that is located_backward away from a front cowl portion including the cowl upper panel **44** so as to extend in the vehicle width direction substantially above the dash lower panel **3**. The instrument panel member **45** is connected with rear portions of the hinge pillars **42**, **42** at its both left-and right ends, as shown in FIG. **2.** The instrument panel member **45** at least partly supports an instrument panel **46**.

Further, as shown in FIGS. **1** and **2**, the above-mentioned recess portion **3a** is formed in such manner that the intermediate or central portion of the dash lower panel **3** in the vehicle width direction is recessed backward from the front cowl portion to the instrument panel member **45.** Herein, the above-mentioned pair of extensions **17a, 17a** are formed to be integral with the upper tunnel member **17** fixed on the tunnel portion **16,** which extend forward along side faces of the recess portion **3a** of the dash lower panel **3** to a base face (non-recessed face).

Herein, in FIGS. **1** through **3,** a reference numeral **47** denotes a front wheel, and other reference numerals denote respective pairs as follows: a rear wheel **48**; hood **49**; a trunk lid **50**; a steering rack **51**; a front suspension cross member **52**; an exhaust pipe **53**; a lower tunnel member **54** extending in substantially parallel with the floor frame **25** in the longitudinal direction; a lower connecting member **55** interconnecting detachably the lower tunnel members **54**, **54**; and a rear differential device **56**.

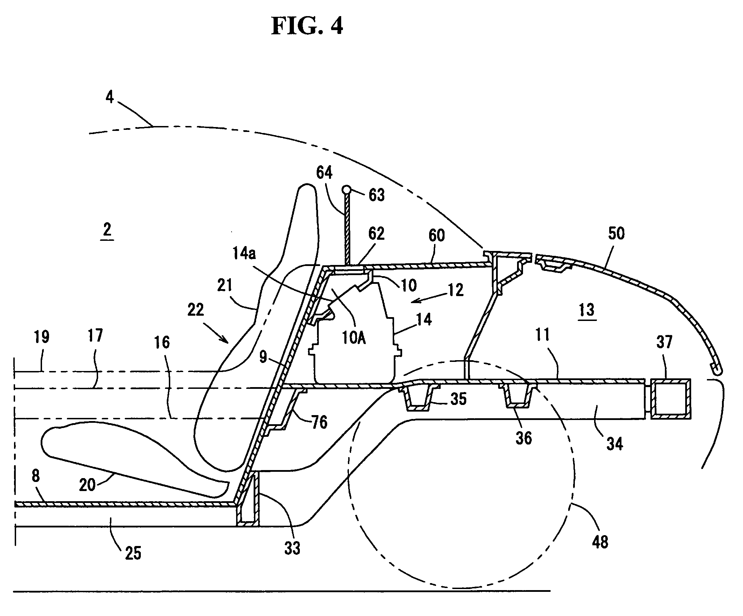

Next, an induction or intake structure for inside and outside air of the air conditioner for the vehicle will be described referring to FIGS. **4** through **7**. There is provided a rear package **60** extending substantially horizontally from an upper end of the rear bulkhead **9**, and the above-mentioned rear cowl portion **10** is located in the corner between the rear package **60** and the rear bulkhead **9**.

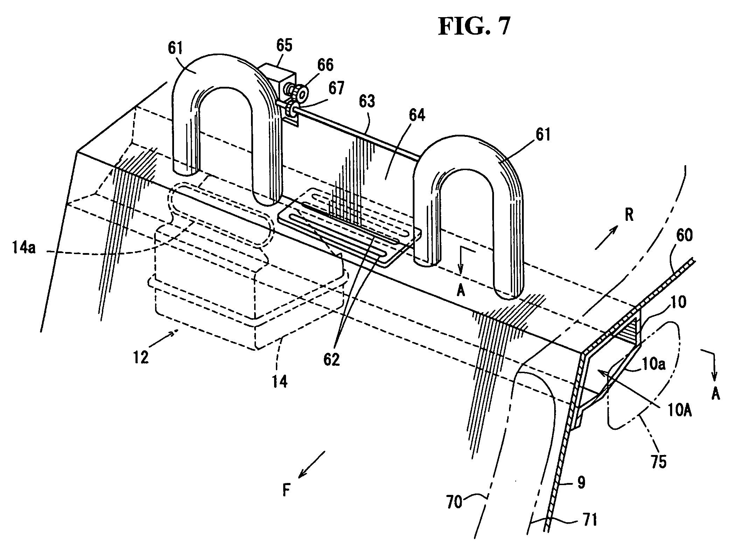

Further, as illustrated in FIG. **7**, roll bars **61, 61** are provided on the rear package **60** so as to correspond to the left and right seats **22, 22** in order to protect the passengers, between which there is formed an inside-and-outside air induction or intake port **62** which is integral or unitary with the rear package **60** and the rear cowl portion **10** as illustrated in FIGS. **4** through **6.**

The above-mentioned blower and cooling unit **14** is configured to take in the inside and outside air from its intake port **14a** via the inside-and-outside air induction port **62** and the closed cross section **10A** of the rear cowl portion **10**.

As shown in FIG. **7**, there is provided a supporting shaft **63** on and between upper portions of the roll bars **61, 61** so as to rotate around its shaft axis. An aero-board **64** is attached to the supporting shaft **63**, and a lower end of the aero-board **64** extends close to and/or substantially above the inside-and-outside air induction port **62** formed on the rear cowl portion **10**.

A rotary actuator **65**, such as, for example, a DC motor, is mounted on a back face of one of the roll bars **61, 61** directly or via a bracket (not illustrated). A drive gear **66** fixed to a rotational shaft of the actuator **65** and a driven gear **67** connected with the above-mentioned supporting shaft **63** are engaged with each other all the time, and thereby the aero-board **64** is changed in its position by the rotary actuator **65** via respective parts **66, 67, 63**.

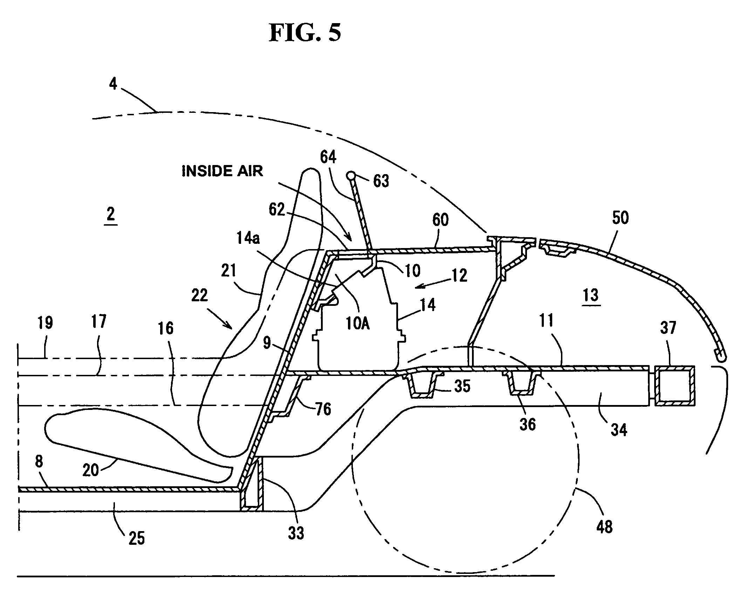

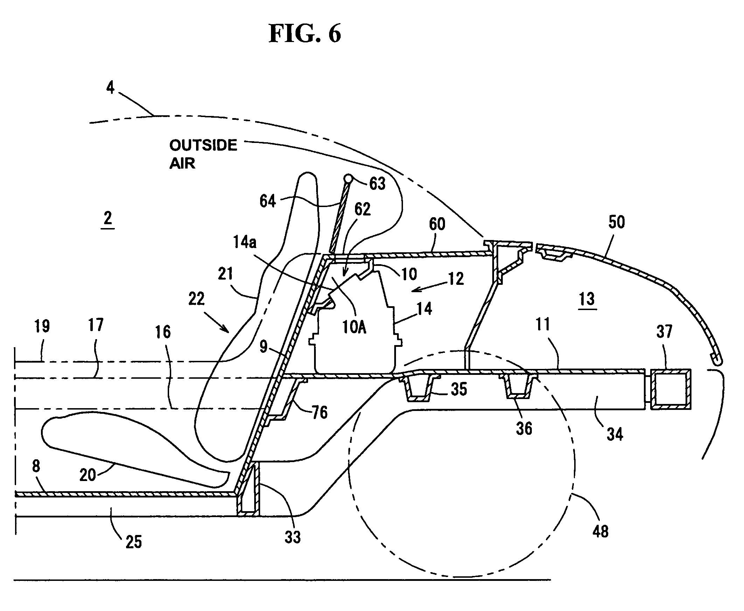

Namely, when the aero-board **64** is located in its neutral position as shown in FIG. **4,** the inside-and-outside air induction port **62** takes in the inside air and the outside air. Meanwhile, when the lower end of the aero-board **64** is located backward as shown in FIG. **5**, the inside-and-outside air induction port **62** takes in the inside air. Further, when the lower end of the aero-board **64** is located forward as shown in FIG. **6,** the inside-and-outside air induction port **62** takes in the outside air (rolled-in wind) due to a negative pressure occurring behind the aero-board **64**. Namely, the positional change (change of its slant angle) of the aero-board **64** provides the induction or intake switching of the inside-and-outside air. In other words, the position of the aero-board **64** is decisive for selectively intaking air from inside the passenger compartment **2** and/or from outside the passenger compartment **2** (i.e. the rolled-in wind).

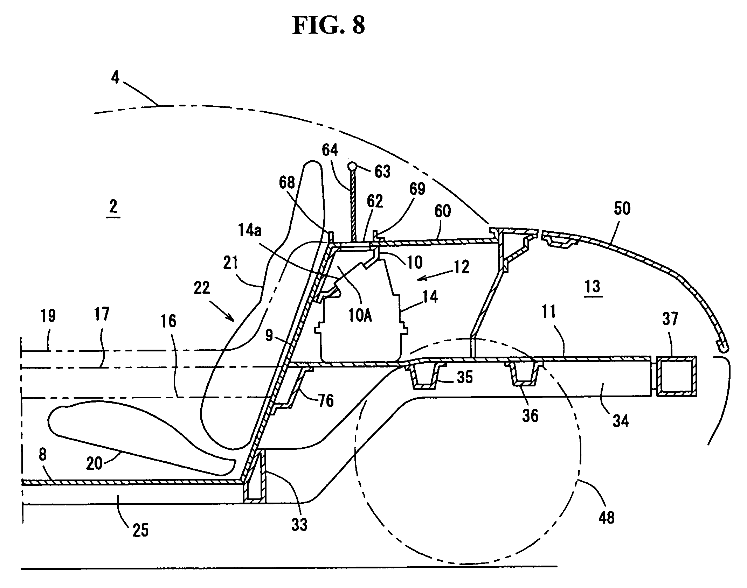

Herein, as shown in FIG. **8,** there may be provided limitation members **68, 69** such as stoppers to limit an overrun of the aero-board **64** before and behind the inside-and-outside air induction port **62**, aiming at simplifying a control of the rotary actuator **65** such as the DC motor.

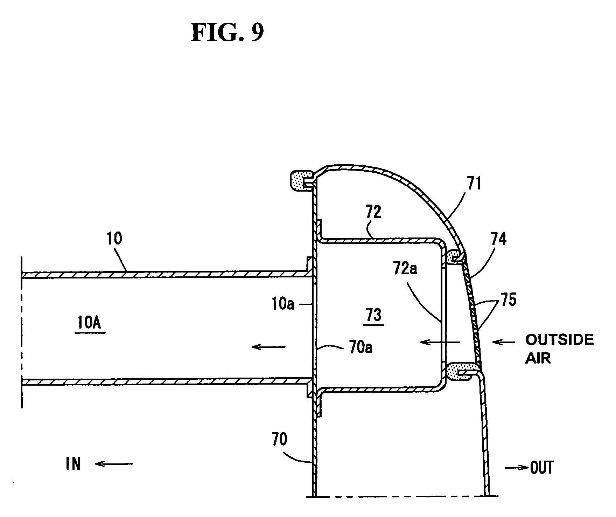

FIG. **9** is a sectional view of a major part taken on line **A-A** of FIG. **7,** in which an inner panel **70** is attached at an end portion of the rear cowl portion **10**, and a rear fender panel **71** is provided outside the inner panel **70** which constitutes a vehicle outside wall of the vehicle body. Further, a beltline reinforcement **72** is attached to an inside face of the rear fender panel **71** of the inner panel **70**. There is also provided an outside-air induction or intake passage **73** which leads to the rear cowl portion **10** and opens to an outside of the vehicle through the rear fender panel **71** as the vehicle outside wall. This outside-air induction passage **73** is formed by connecting an outside-air induction or intake port **75** formed on the rear fender panel **71** with a mesh member **74** disposed its opening portion, an opening portion **72a** of the beltline reinforcement **72**, an opening portion of the inner panel **70**, and an opening portion **10a** at the side of the rear cowl portion **10** in the vehicle width direction. Herein, in FIGS. **4** through **6,** a reference numeral **76** denotes a cross member which is formed in the corner between a lower face of a front portion of the rear floor **11** and a back face of a middle portion of the rear bulkhead **9**.

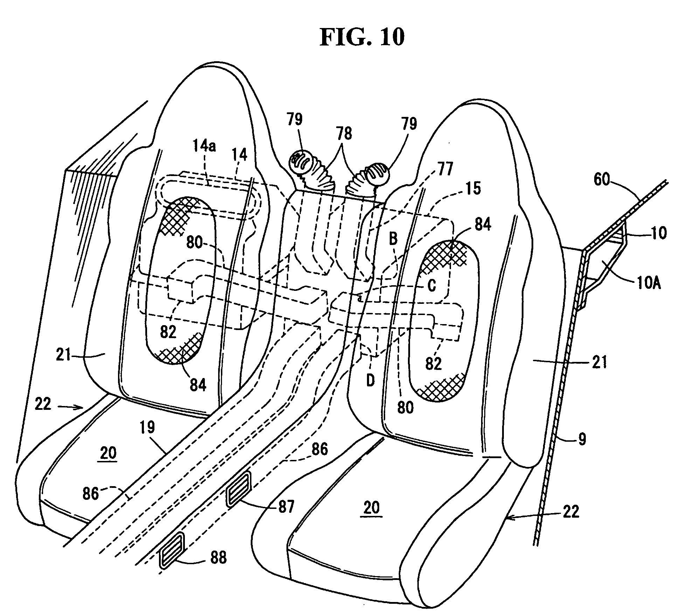

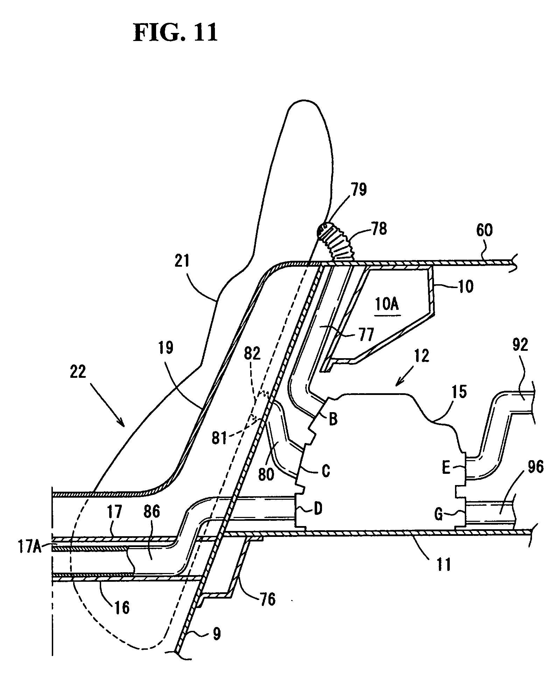

Next, a blowoff passage for conditioned air (warm air) such as cooling air from the heater unit **15** will be described referring to FIGS. **2, 10** and **11.** The heater unit **15** comprises a pair of blowoff portions **B, C, D, E,** and **G** as illustrated in FIGS. **10** and **11**. Meanwhile, the passenger seats **22, 22** (particularly, the seat backs **21, 2**1) are disposed before and close to the rear bulkhead **9**.

A duct **77** is coupled to the blowoff portion **B** of the heater unit **15**, and a blowoff port **79** is formed at a front end of a bellows portion **78** disposed at an upper end of the duct **77** extending substantially upward. Thereby, this blowoff port **79** is located inside the rear bulkhead **9** so that the conditioned air from the rear air conditioning unit **12** is directed to or near a neck portion of the passenger. The above-mentioned bellows member **78** (as preferred adjustable members) allows the position and direction (i.e. the adjustment) of the blowoff port **79** to be adjustable according to needs or physical features of passengers.

Further, a duct **80** is coupled to the blowoff portion **C** of the heater unit **15**, and a blowoff port **82** is formed at a front end of a bellows portion **81** disposed at an upper end of the duct **80** substantially extending upward slightly. Thereby, this blowoff port **82** is attached to the seat back **21** so that the conditioned air from the rear air conditioning unit **12** is directed to a back portion and/or a lumber portion of the passenger sitting on the seat **22** or to an inner part of the seat **22** (as a preferred climatised or temperature controlled seat). The above-mentioned bellows member **78** allows the position and direction of the blowoff port **79** to be adjustable according to needs or physical features of passengers.

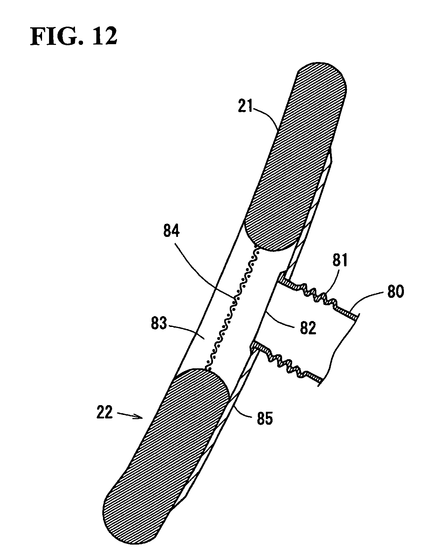

As shown in FIG. **12**, a penetrating hole **83** is formed at an intermediate portion, preferably substantially the middle portion, of the seat back **21** so as to penetrate through the seat back, and a net member **84** (as a preferred air-permeable portion) is disposed at the middle portion of the penetrating hole **83** in the longitudinal direction of the vehicle so as to substantially cover a whole part of the penetrating hole **83**.

Also, an edge of the blowoff port **82** is attached to a back face portion of the seat back **21** via an attaching member **85**. Thereby, when the passenger leans on the seat back **21**, the blowoff port **82** is prevented from being closed. Accordingly, the conditioned air can be properly provided to the back portion and/or lumber potion of the passenger, and there is provided a structure which is available to a forward and backward slide of the seat **22** and a reclining of the seat back **21** by means of the bellows portion **81**.

Further, as shown in FIGS. **10** and **11,** a duct **86** is coupled to the blowoff port **D** of the heater unit **15**, which is led into the closed cross section **17A** formed with the upper tunnel member **17** and the tunnel portion **16** extending forward from the lower portion of the rear bulkhead **9** so as to extend substantially forward. There are also provided a blowoff port **87** which blows off the conditioned air from the rear air conditioning unit **12** toward a thigh portion of the passenger and/or a blowoff port **88** which blows off the one toward a foot portion of the passenger as well. The blowoff ports **87, 88** are coupled to the duct **86** via the console **19** and the upper tunnel member **17**, and there are provided movable louvers at the respective blowoff ports **87,88**.

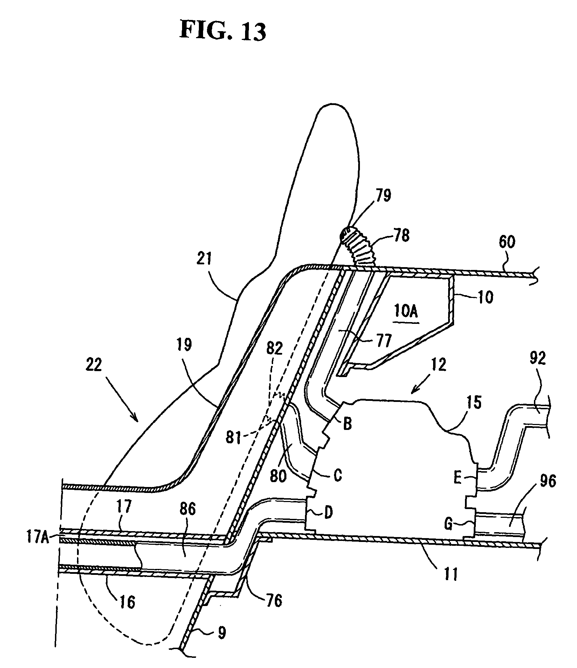

Herein, the duct **86** may be led into the closed cross section **17A** via an opening of the rear bulkhead **9** and an opening of the upper tunnel member **17** as shown in FIG. **11,** or as shown in FIG. **13,** it may be led into the closed cross section **17A** via an opening of the rear floor **11**, the closed cross section of the cross member **76** and an opening of the rear bulkhead **9**.

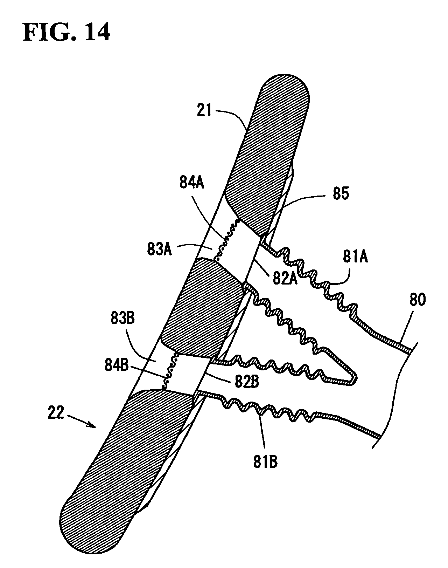

Further, a structure illustrated in FIG. **14** may be used instead of the structure illustrated in FIG. **12.** Namely, the duct **80** coupled to the blowoff port **C** of the heater unit **15** is bifurcated at its fore ends, and blowoff ports **82A, 82B** are formed respectively at the both ends via bellows portions **81A, 81B.** At the middle portion of the seat back **21**, penetrating holes **83A**, **83B** are formed independently to penetrate through the seat back and be away or spaced from each other substantially in the vertical direction. Further, net members **84A**, **84B** (as preferred air-permeable portions) are respectively disposed at the middle portions of the penetrating holes **83A, 83B** to cover the holes. Accordingly, the conditioned air blown off from the upper blowoff port **82A** may be directed preferably toward the back portion of the passenger, and the conditioned air blown off from the lower blowoff port **82B** may be directed preferably toward the lumber portion of the passenger.

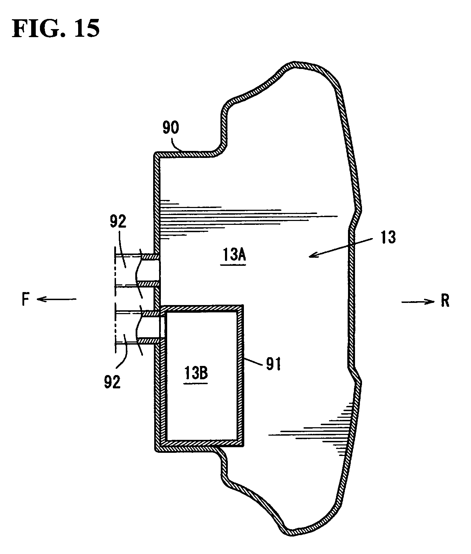

The trunk room **13** enclosed by a trunk trim **90,** as illustrated in FIG. **15**, is divided into plural load compartments **13A, 13B,** and a smaller load compartment **13B** is designed as a cooler box **91.** An upper opening of the cooler box **91** is covered by a cooler box lid capable of opening (not illustrated).

The above-mentioned rear air conditioning unit **12** is disposed between the rear bulkhead **9** which separates the rear portion of the passenger compartment and the trunk room **13** which is disposed behind the rear bulkhead. A pair of ducts **92, 92** are coupled to the blowoff port **E** of the heater unit **15** illustrated in FIGS. **11** and **13,** which constitutes a conditioning cooling air passage to lead the conditioning or cooling air into the trunk room **13** and condition or cool it, as shown in FIGS. **11, 13** and **15**. Particularly, the conditioning or cooling air is took into the load compartment **13B** which is configured as the cooler box **91.**

Although it is provided to the divided load compartments **13A, 13B** respectively via the ducts **92, 92** in this embodiment, the cooling air may be, off course, provided to only the load compartment **13B** of the cooler box **91.** Further, although the trunk room **13** is divided into the two load compartments **13A, 13B** in this embodiment, more load compartments than two may be also formed in the trunk **13**.

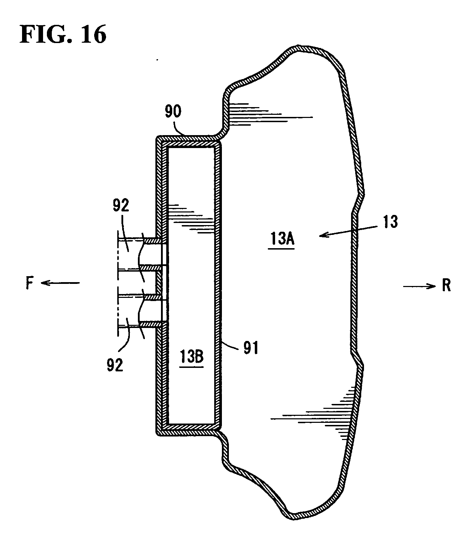

Further, as shown in FIG. **16,** the trunk room **13** may be divided into the front load compartment **13B** and the rear load compartment **13A** which are separated or offset from each other in the longitudinal direction and extend substantially in the vehicle width direction, and the front load compartment **13B** may be designed as the cooler box **19** by coupling the pair of ducts **92, 92** thereto.

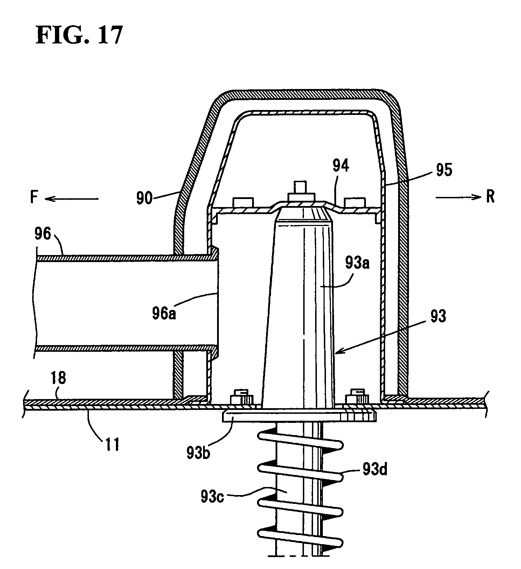

Herein, there is a suspension damper **93** for supporting the rear wheel **48** of the vehicle near the trunk room **13** as illustrated in FIGS. **2** and **17.** The suspension damper **93** comprises a damper support **93a**, an upper spring seat **93b**, a strut **93c**, a coil spring **93d** and so on. The upper spring seat **93b** is supported by the rear floor **11** or a suspension housing (not illustrated), and an upper end portion of the damper support **93a** is supported on a suspension tower **95** via a bracket **94**. The suspension damper **93** includes oil and rubber members therein.

Also, a pair of ducts **96, 96** are coupled to the blowoff port **G** of the heater unit **15** illustrated in FIGS. **11** and **13,** which constitutes a cooling air passage to lead the cooling air from the rear air conditioning unit **12** to the left and right suspension dampers **93, 93,** as shown in FIGS. **2, 11, 13** and **17.** Accordingly, the respective suspension dampers **93, 93** can be cooled by the cooling air from the rear air conditioning unit **12.**

In this embodiment, a front end opening portion **96a** of each of the above-mentioned ducts **96, 96** is connected to the suspension tower **95** via the trunk trim **90** as shown in FIGS. **2** and **17.** Accordingly, the suspension damper **93,** particularly the oil and rubber members therein are cooled through an inside space of the suspension tower **95**, thereby preventing durability of the suspension damper **93** from deteriorating and functions of the damper from changing due to a heat.

While the vehicle remains parked outside in the daytime, the temperature of an atmosphere around the suspension damper **93** increases to a high one at which the durability of the suspension damper **93** deteriorates or the damper function changes due to the heat. However, these problems can be at least reduced or solved by cooling the suspension damper **93** by the cooling air from the duct **96** as the damper cooling air passage.

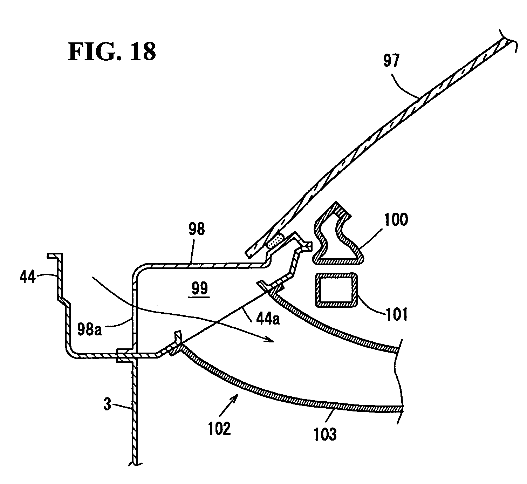

As shown in FIG. **18,** the cowl upper panel **44** disposed above the dash lower panel **3** is coupled to a front cowl panel **98** to support a front end of a windshield **97**.

The front cowl upper panel **98** includes a substantially L-shaped cross section and extends substantially in the vehicle width direction, and a cowl closed cross section **99** is formed between the front cowl panel **98** and the cowl upper panel **44.** There are provide opening portions **98a, 44a** for the front natural ventilation which are formed at a vertical portion of the above-mentioned front cowl panel **98** and the cowl upper panel **44** respectively which substantially correspond to the cowl closed cross section **99**.

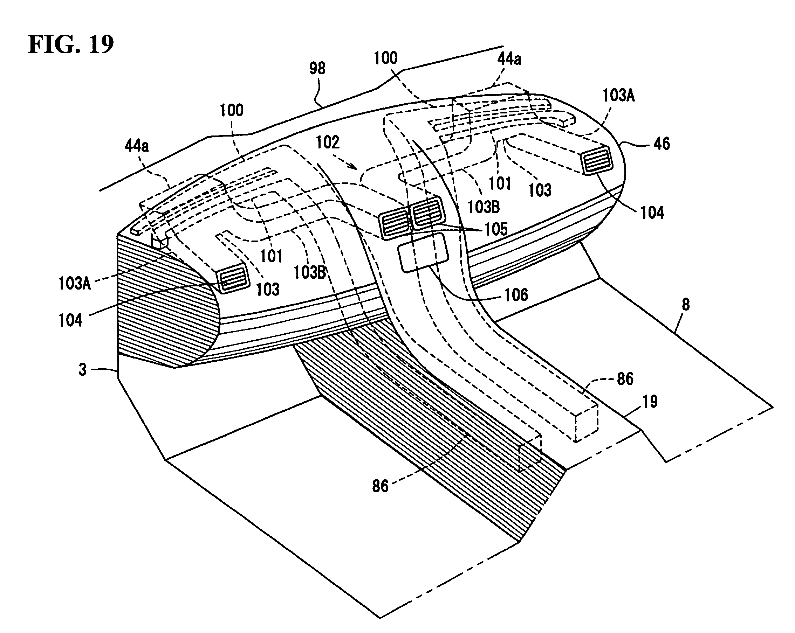

Meanwhile, the pair of ducts **86, 86** illustrated in FIG. **10** extend forward in the closed cross section **17A, 17A** between the tunnel portion **16** and the upper tunnel member **17** to a portion near a slant lower end of the windshield **97** in the instrument panel **46** as illustrated in FIG. **19.** Front ends of these extended ducts are connected to a pair of left-and-right front defroster ducts **100, 100** and a pair of left-and-right side defroster ducts **101, 101** to provide a constitution of an anti-blur of the windshield. Herein, the ducts **100, 100** and **101, 101** are formed so as to extend substantially in the vehicle width direction from the above-mentioned extended ducts.

Further, as illustrated in FIG. **19,** there is provided a front natural ventilation unit **102** which is disposed in the instrument panel **46** before the passenger compartment to take in the outside air (i.e. unconditioned or natural air) and blow off the outside air into the passenger compartment **2**.

The front natural ventilation unit **102** comprises bifurcated and substantially symmetrical ducts **103, 103** which are coupled to the above-mentioned opening portions **44a, 44a** illustrated in FIG. **18.** Each side duct **103A** constituting one of the ducts **103, 103** is provided with a side vent blowoff port **104** which is located at a side end of the instrument panel **46**. Each center duct **103B** constituting the other of the ducts **103, 103** is provided with a center vent blowoff port **105** which is located substantially at the center of the instrument panel **46.** These blowoff ports **104,104, 105, 105** are formed on or at an outer surface of the instrument panel **46**.

Namely, as illustrated by an arrow in FIG. **18,** the outside air is took in from the opening portion **98a** of the front cowl panel **98**, the cowl closed cross section **99**, and the opening portion **44a** of the cowl upper panel **44** into the pair of ducts for the natural ventilation, and the outside air is blown off into the passenger compartment **2** via the side vent blowoff ports **104, 104** and the center vent blowoff ports **105, 105**.

There is provided an air conditioning control portion **106,** as shown in FIG. **19**, at the console **19** preferably below the center vent blowoff portions **105, 105** or near or on the tunnel portion **16,** which is located at one position and functions as control means for (preferably cooperatively) controlling the rear air conditioning unit **12** and/or the front natural ventilation unit **10**. The air conditioning control portion **106** includes plural switches, CPU and so on which are not illustrated herein for convenience.

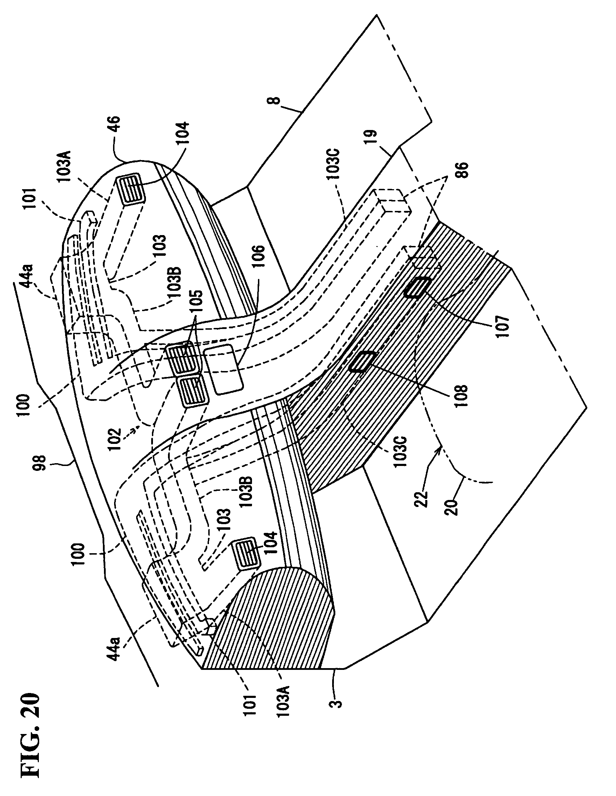

An alternative structure of the front natural ventilation unit **102** shown in FIG. **20** may be used instead of the one shown in FIG. **19.** The front natural ventilation unit **102** shown in FIG. **20** are additionally provided with a pair of tunnel ducts **103C, 103C** bifurcated from the center ducts **103B, 103B** which are disposed in or on the closed cross sections **17A, 17A** between the tunnel portion **16** and the upper tunnel member **17**.

The tunnel duct **103C** is located outside the duct **86** which is disposed similarly in the closed cross section **17A**, and includes a blowoff port **107** to blow off the outside air toward the thigh portion of the passenger and/or a blowoff port **108** to blow off the one toward the foot portion of the passenger which are took into the tunnel duct **103C** from the front natural ventilation unit **102**, thereby improving a comfortable ventilation for the passenger by utilizing the outside (preferably unconditioned) air of the vehicle.

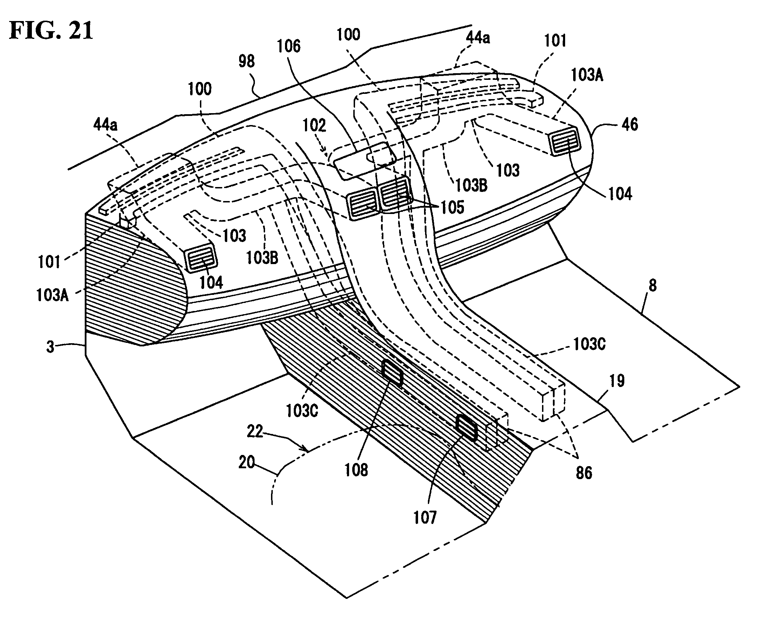

Herein, preferably, the blowoff ports **107, 108** may be coupled to the tunnel duct **103C** via the console **19** and the upper tunnel member **17**, and the tunnel duct **103C** may terminate at downstream of the blowoff port **107**. Further, the above-mentioned air conditioning control portion **106** may be disposed, as illustrated in FIG. **21**, at the center portion of the console **19** or the instrument panel **46** above the center vent blowoff port **105.**

As described above, there is provided the air conditioner for the vehicle comprising the passenger compartment **2** of the vehicle, the rear bulkhead **9** separating the rear portion of the passenger compartment **2**, the rear cowl portion **10** disposed above the rear bulkhead **9**, and the rear air conditioning unit **12** disposed behind the rear bulkhead **9**, the rear air conditioning unit **12** taking in the inside-and-outside air for air conditioning via the rear cowl portion **10** and blowing off or discharging the conditioned air into the passenger compartment **2** of the vehicle.

According to the above-mentioned structure, since a layout of an air conditioning unit disposed at the front side of the vehicle is at least partly omitted, the vehicle engine **5** as a heavy article can be located at the center side of the vehicle and the yaw inertia moment of the vehicle can be reduced, thereby improving the maneuverability and stability of the vehicle and the dynamic performance of the vehicle. Namely, compatibleness of the center layout of the engine **5** and a layout of the rear air conditioning unit **12** can be provided.

Further, since the rear air conditioning unit **12** takes in the inside-and-outside air for air conditioning via the rear cowl portion **10** and blows off or discharges the conditioned air into the passenger compartment **2** of the vehicle, the compatibleness of the layout of the rear air conditioning unit **12** and the induction of the inside-and-outside air can be provided.

Further, the engine room **1** in which the engine **5** of the vehicle is disposed is formed before and closer to the passenger compartment **2** of the vehicle. Accordingly, a compact vehicle with a front engine can be provided.

Further, the upper part of the passenger compartment **2** is covered by the roof **4** capable of opening (so-called convertible top). Accordingly, a simple structure of the air conditioner for a so-called open or convertible car can be provided.

Additionally, there are provided the inside-and-outside air induction port **62** formed on the upper side of the rear cowl portion **10** and the aero-board **64** attached near the inside-and-outside air induction port **62**, wherein the aero-board **64** is attached so as to change its position and the positional change of the aero-board **64** provides the induction or intake switching of the inside-and-outside air for air conditioning. Accordingly, a proper switching between the inside-air induction and the outside-air induction can be attained by changing the position of the aero-board **64**. Furthermore, the aero-board **64** advantageously reduces the turbulences in the passenger compartment **2** when the car is being driven with the roof **4** being open. Accordingly, the aero-board **64** advantageously acts also as a windblocker.

Further, there is provided the outside-air induction passage **73** which leads to the rear cowl portion **10** and opens to the outside of the vehicle through the vehicle outside wall (preferably the rear fender panel **7**). Accordingly, the induction of the outside air through the vehicle outside wall (preferably the rear fender panel **7**) can be ensured.

Further, there is provided the blowoff port **79.** (for example, the blowoff port for blowing off or discharging the conditioned air to the neck portion of the passenger sitting on the seat **22**) for blowing off the conditioned air from the rear air conditioning unit **12**, which is formed on the side of the rear bulkhead **9** which is located toward the inside of the passenger compartment **2** of the vehicle. Accordingly, the distance between the rear air conditioning unit **12** and the blowoff port **79** can be made short, thereby reducing a passage length between them.

Additionally, the seat **22** of the vehicle is disposed before and close to the rear bulkhead **9** in the passenger compartment **2** of the vehicle, and the seat has the blowoff ports **82, 82A, 82B** formed thereon for blowing off or discharging the conditioned air from the rear air conditioning unit **12**. Accordingly, comfortable air conditioning can be attained by the conditioned air from the blowoff ports **82, 82A**, **82B** formed on the seat **22**.

Further, the above-mentioned blowoff ports **82, 82A** are located so as to blow off or discharging the conditioned air toward the back portion of the passenger sitting on the seat **22**. Accordingly, since the proper control of air conditioning at the back portion of the passenger is provided, comfortable air conditioning can be attained.

Also, the blowoff ports **82, 82B** on the seat are located so as to blow off the conditioned air toward the lumbar portion of the passenger sitting on the seat **22**. Accordingly, since the proper control of air conditioning at the lumber portion of the passenger is provided, comfortable air conditioning can be attained.

Further, there is provided the tunnel portion **16** extending forward of the vehicle from the lower portion of the rear bulkhead **9**, and the tunnel portion **16** has the blowoff port **87** formed thereon or thereat for blowing off or discharging the conditioned air from the rear air conditioning unit **12** toward the thigh portion of the passenger. Accordingly, since the proper control of air conditioning at the thigh portion of the passenger is provided with utilizing the tunnel portion **16,** comfortable air conditioning can be attained.

Further, there is (additionally or alternatively) provided the tunnel portion **16** extending forward of the vehicle from the lower portion of the rear bulkhead **9**, and the tunnel portion **16** has the blowoff port **88** formed thereon for blowing off or discharging the conditioned air from the rear air conditioning unit **12** toward the foot portion of the passenger. Accordingly, since the proper control of air conditioning at the foot portion of the passenger is provided with utilizing the tunnel portion **16**, comfortable air conditioning can be attained.

Additionally, there is provided the upper tunnel member **17** above the tunnel portion **16** which forms the passage having the substantially closed cross section **17A** with the tunnel portion **16**, and the air conditioning duct **86** for the conditioned air from the rear air conditioning unit **12** is formed in the closed cross section **17A**. Accordingly, the air conditioning duct **86** can be provided properly by utilizing the closed cross section **17A** between the tunnel portion **16** and the upper tunnel member **17** formed to increase rigidity of the vehicle floor and the vehicle body.

Also, the rear air conditioning unit **12** takes in at least the inside air of the passenger compartment **2**, conditions (particularly controls the termperature and/or humidity and/or filters fine particles suspended therein) the took-in air, and blows off or discharges the conditioned air into the passenger compartment **2**, and there is further provided the front natural ventilation unit **102** which is disposed before the passenger compartment **2**, takes in the outside air of the vehicle, and blows off the took-in air into the passenger compartment **2** (without any conditioning). Accordingly, the rear air conditioning and the natural ventilation can made compatible. Also, since the front natural ventilation unit **102** is provided before the passenger compartment **2**, the move-back layout of the engine **5** and the function of air conditioning can be made compatible.

Namely, the front natural ventilation unit **102**, unlike a normal front air conditioning unit, does not need any evaporator, heater core, fans or the like, and just has a structure to take in the outside air and blow it off. Accordingly, the move-back layout of the engine **5** and the function of the natural ventilation can be made compatible.

Further, there is provided air conditioning control means (preferably the air conditioning control portion **106**) for (preferably cooperatively) controlling the rear air conditioning unit **12** and/or the front natural ventilation unit **102**. Accordingly, since the rear air conditioning unit **12** and the front natural ventilation unit **102** are controlled preferably cooperatively by the air conditioning control means (preferably the air conditioning control portion **106),** utility of controlling can be improved without controlling them separately.

Also, there is provided the tunnel portion **16** extending forward of the vehicle from the lower portion of the rear bulkhead **9**, and the tunnel portion **16** has the blowoff ports **107**, **108** formed thereon for blowing off the outside air of the vehicle from the front natural ventilation unit **102**. Accordingly, the comfortable feeling by the outside air during the vehicle running can be provided to the passenger by utilizing the tunnel portion **16**. Especially, the ventilation by this outside air (natural wind or air) can be enhanced or increased for the passenger in the open car.

Further, the rear air conditioning unit **12** is disposed between the rear bulkhead **9** and the trunk room **13** which is disposed behind the rear bulkhead **9**, and there is further provided the trunk-room cooling-air passage (preferably the duct **92**) for taking in the cooling air from the rear air conditioning unit **12** and providing the cooling air into the trunk room **13** to cool the inside of the trunk room **13.** Accordingly, since the rear air conditioning unit **12** is disposed between the rear bulkhead **9** and the trunk room **13** behind the rear bulkhead **9** and the trunk room **13** is cooled by the cooling air from the rear air conditioning unit **12**, forming the trunk room **13** and providing the rear air conditioning unit **12** can be made compatible, and also the trunk room **13** can be cooled by the rear air conditioning unit **12** of the air conditioner for the vehicle, without providing any additional cooling devices for the trunk room **13**.

Further, the trunk room **13** preferably is divided into plural load compartments **13A, 13B,** and the cooling air is introduced into at least one of the load compartments **13a, 13B** to preferably constitute it as the cooler box **91.** Accordingly, the cooler box **91** can be cooled certainly and efficiently.

Also, there is provided the suspension damper **93** for suspending the rear wheel **48** of the vehicle close to the trunk room **13**, and the suspension damper **93** preferably is cooled by the cooling air from the rear air conditioning unit **12**. Accordingly, since the cooling air of the rear air conditioning unit 12 cools the suspension damper **93**, durability of the suspension damper **96** can be prevented from deteriorating and the function of the damper **93** can be also prevented from changing due to the heat. Particularly, heat deterioration of oil, packing, and rubbers in the damper **93** can be preferably prevented.

Additionally, there is provided the damper cooling-air passage (preferably the duct **96**) for taking in the cooling air from the rear air conditioning unit **12** and providing the cooling air to the suspension damper **93**. Accordingly, the damper can be cooled more certainly by the cooling air from the damper cooling-air passage (preferably the duct **96**).

Further, there is provided the suspension damper **93** for suspending the rear wheel **48** of the vehicle behind the rear air conditioning unit **12**, and the suspension damper **93** is cooled via the damper cooling-air passage (preferably the duct **96**) which is formed for taking in the cooling air from the rear air conditioning unit **12** and providing the cooling air to the suspension damper **93**. Accordingly, since the cooling air from the rear air conditioning unit **12** is led to the suspension damper **93** via the damper cooling-air passage (preferably the duct **96**) and cools the damper **93** (particularly, oil, packing, and rubber in the damper **93**), durability of the suspension damper **93** can be prevented from deteriorating and the function of the damper **93** can be also prevented from changing due to the heat.

With regard to the correspondence in structure between the present invention and the above-mentioned embodiment, the air conditioning unit preferably is embodied by the rear air conditioning unit **12**, the outside wall of the vehicle body preferably is embodied by the rear fender **71**, the tunnel member preferably is embodied by the upper tunnel member **17**, the air conditioning control means preferably is embodied by the air conditioning control portion **106**, the trunk room cooling-air passage preferably is embodied by the duct **92**, and the damper cooling-air passage preferably is embodied by the duct **96**, respectively.

However, the invention is not limited to this embodiment. Any other modifications may be applied within the scope of a sprit of the present invention as defined by the claims.

## Claims

1. A vehicle comprising:
a passenger compartment (**2**);
a rear bulkhead (**9**) at least partly separating a rear portion of said passenger compartment (**2**);
a rear cowl portion (**10**) disposed at least partly above said rear bulkhead (**9**); and
a rear air conditioning unit (**12**) disposed behind said rear bulkhead (**9**), the rear air conditioning unit (**12**) taking in inside-and-outside air for air conditioning via said rear cowl portion (**10**) and blowing off conditioned air into said passenger compartment (**2**) of the vehicle.

2. The vehicle of claim 1, wherein an engine room (**1**) in which an engine **(5)** of the vehicle is disposed is formed before said passenger compartment **(2)** of the vehicle.

3. The vehicle of one of the preceding claims, wherein an upper part of said passenger compartment (**2**) is covered by a roof (**4**) capable of opening.

4. The vehicle of one of the preceding claims, further comprising an inside-and-outside air induction port (**62**) formed on an upper side of said rear cowl portion (**10**) and an aero-board (**64**) attached near said inside-and-outside air induction port (**62**), wherein said aero-board (**64**) is attached so as to change its position and a positional change of said aero-board (**64**) provides an induction switching of said inside-and-outside air for air conditioning.

5. The vehicle of one of the preceding claims, further comprising an outside-air induction passage (**73**) which leads to said rear cowl portion (**10**) and opens to an outside of the vehicle through a vehicle outside wall.

6. The vehicle of one of the preceding claims, further comprising at least one blowoff port (**79; 82; 82A; 82B; 87; 88**) for blowing off the conditioned air from said rear air conditioning unit (**12**), which is formed on a side of said rear bulkhead (**9**) which is located toward an inside of said passenger compartment (**2**) of the vehicle.

7. The vehicle of one of the preceding claims, wherein a seat (**22**) of the vehicle is disposed before and close to said rear bulkhead (**9**) in the passenger compartment (**2**) of the vehicle, and the seat (**22**) has at least one blowoff port (**82**; **82A; 82B**) formed thereon or therein for blowing off the conditioned air from said rear air conditioning unit (**12**).

8. The vehicle of claim 7, wherein said blowoff port (**82A; 82B**) on the seat is located so as to blow off the conditioned air toward a back portion and/or a lumbar portion of a passenger sitting on the seat (**22**).

9. The vehicle of one of the preceding claims, wherein there is provided a tunnel portion (**16**) extending forward of the vehicle from a lower portion of said rear bulkhead **(9),** and said tunnel portion **(16)** has a blowoff port **(87)** formed thereon for blowing off the conditioned air from said rear air conditioning unit (**12**) toward a thigh portion of a passenger and/or a blowoff port (**88**) formed thereon for blowing off the conditioned air from said rear air conditioning unit (**12**) toward a foot portion of a passenger.

10. The vehicle of claim 9, wherein there is provided a tunnel member (**17**) above said tunnel portion (**16**) which forms a passage having a closed cross section (**17A**) with the tunnel portion (**16**), and an air conditioning duct (**86**) for the conditioned air from said rear air conditioning unit (**12**) is formed in said passage having the closed cross section (**17A**).

11. The vehicle of one of the preceding claims, wherein said rear air conditioning unit (**12**) takes in at least inside air of the passenger compartment (**2**), conditions the took-in air, and blows off the conditioned air into the passenger compartment (**2**), and there is further provided a front natural ventilation unit (**102**) which is disposed before the passenger compartment (**2**), takes in outside air of the vehicle, and blows off the took-in air into the passenger compartment (**2**).

12. The vehicle of claim 11, further comprising air conditioning control means (**106**) for cooperatively controlling said rear air conditioning unit (**12**) and said front natural ventilation unit (102).

13. The vehicle of claim 11 or 12, wherein there is provided a tunnel portion (**16**) extending forward of the vehicle from a lower portion of said rear bulkhead (**9**), and said tunnel portion (**16**) has a blowoff port (**107; 108**) formed thereon for blowing off the outside air of the vehicle from said front natural ventilation unit (**102**).

14. The vehicle of one of the preceding claims, wherein said rear air conditioning unit (**12**) is disposed between said rear bulkhead (**9**) and a trunk room (**13**) which is disposed behind the rear bulkhead (**9**), and there is further provided a trunk-room cooling-air passage (**92**) for taking in cooling air from the rear air conditioning unit (**12**) and providing the cooling air into said trunk room (**13**) to cool an inside of the trunk room (**13**).

15. The vehicle of claim **14,** wherein said trunk room **(13)** is divided into plural load compartments **(13A, 13B),** and said cooling air is introduced into at least one of the load compartments to constitute it as a cooler box **(91).**

16. The vehicle of claim 14 or 15, wherein there is provided a suspension damper (**93**) for suspending a rear wheel of the vehicle close to said trunk room (**13**), and the suspension damper (**93**) is cooled by said cooling air from the rear air conditioning unit (**12**).

17. The vehicle of claim 16, wherein there is further provided a damper cooling-air passage (**96**) for taking in said cooling air from the rear air conditioning unit (**12**) and providing the cooling air to said suspension damper (**93**).

18. The vehicle of one of the preceding claims, wherein there is provided a suspension damper (**93**) for suspending a rear wheel of the vehicle behind said rear air conditioning unit (**12**), and the suspension damper (**93**) is cooled via a damper cooling-air passage (**96**) which is formed for taking in a cooling air from said rear air conditioning unit (**12**) and providing the cooling air to the suspension damper (**93**).

19. A use of an air conditioner as a rear air conditioning unit (**12**) for a vehicle according to one of the preceding claims.
